# EUROPEAN PATENT APPLICATION

(11) **EP 0 900 979 A1**
(43) Date of publication of application: **10.03.1999**
(21) Application number: 98500195.7
(22) Date of filing: 03.09.1998
(51) Int. Cl.: F21V 8/00

(54) **Lighting system**

(30) Priority: 05.09.1997 ES 9701899
(71) Applicant: Sanchez Navarro, Francisco, 03690 San Vicente del Raspeig (Alicante) (ES)
(72) Inventor: Sanchez Navarro, Francisco, 03690 San Vicente del Raspeig (Alicante) (ES)
(74) Representative: Urizar Anasagasti, José Antonio

(57) **Abstract**

The present lighting system consists of a light source (1) transmitting the light to an output body (3), made of a translucent plastic body (3) with one or more cables (4) connected to it. Said connections being made with optical fibre cables (4), which convey this light beam to a lighted element (5) also made of a translucent material, with said cables connected to the ends or other points of said lighted element, so that said element (5) will be fully lighted. This lighting system can be used in lighted advertissements, handrails, etc.

## Description

The lighting system of the present invention uses an optical fibre cable between the light emitter, of desired power, color and features, and the final lighted element which can be a tube or body of metacrylate or similar material with translucent properties, which will be completely lighted.

Now, the currently used system consists of glass tubes containing an inert gas such as neon covered with a fluorescent material emitting a light due to ultraviolet radiations produced within the tube when an electrical discharge takes place inside a low pressure gas. Elements required for a proper operation are a starter, a power source and specific tube holding means.

This type of lighting system has some inconveniences such as the useful life of tubes, the gas and its components, which is rather limited specially when affected by adverse weather conditions that shorten the useful life or requiring an additional protection and increasing the cost of equipment.

Furthermore, this system requires a continuos maintenance and the system components (tube, gas, starter) need to be replaced frequently, also when these fluorescent tubes start to fail, tilting appears causing problems to users.

Additionally said tubes break or blow easily when suffering impacts, thus becoming unoperative in the damaged portions. Therefor, this requires a continuous maintenance, causing a high operation cost, a waste of time and a low light quality, and additionally having no possibilities for changes in color or dimensions.

Another lighting system consists of electronic transformers 220V/20,000V, producing with this high voltage a continuous voltaic arc, thus producing a light emission to illuminate an area.

This system presents the problems derived from the use of high voltages with respect to poor connections and splices that produce arcs and sparks causing the aging of materials, faults, etc., as well as high riska of electrical discharges on human or fires. In addition this system requires a full protection against dirt and humidity for the efficiency decreases considerably, this system being expensive with respect to transformers and power consumption.

Also, a known development consists of making the letters, figures and grphics of lighted advertissements with optical fiber, based on long lines of this material, configurating a required pattern and being connected to the wires of the lighting source.

The main disadvantage with such a system is the complicated network of wires, all connected to the power source. Also, the supporting board requires a great plurality of holes to allow the passage of the wires, thus affecting the appearance and construction of the lighting panel. Also, due to the high cost of the optical fiber, the system total cost turns out to be extremely expensive.

With the lighting system of the present invention, it is intended to prevent or reduce the above mentioned problems.

The lighting system of present invention essentially consists of a lighting source connected to a power source, with a corresponding luminaire which helps keeping the light beam in a given alignment and path. A translucent body is coupled to said luminaire, said translucent body preferably being made of metacrylate or similar material with low cost and good properties such as light weight, high strength and transparency.

Said plastic body will have holes, copnnections or the required means for the attachment to it of optical fibre cable. Said optical fibre cable will extend on to another body, preferably of metacrylate or similar material with respect to features and properties, which body will illuminate when receiving the light beam by means of the optical fibre cable.

With this system of the present invention only one connection to a power source will be needed, faulty connections or splices will be easily corrected, thus reducing maintenance costs and time wasted The lighting source may be of any type or capacity as required by the system requirements.

Due to the simplicity of materials used in the lighting system of the present inventions, the average useful life of said system is considerably longer than that of known lighting systems, for there is no practical wear, no high voltages or gases, tec., making an efficient and economic system with minimum maintenance, with practically no spares.

The nature of the lighting system of the present invention will be better understood by considering the following drawing in which:

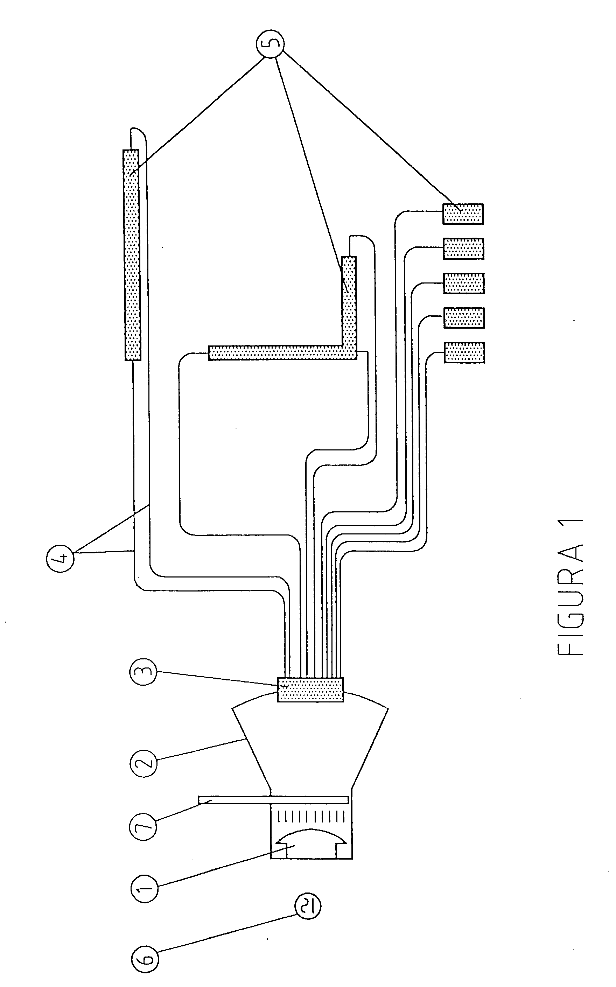

Figure 1 shows an operating diagram of a practical embodiment of the lighting system.

As it can be seen in the figure, there are several main components, first a light source (1) preferably placed inside a luminaire (2) and a body (3), attached to said luminaire, of an adequate size provided with the necessary means for the connection of the optical fibre cables (4), extended to the connection point of the element (5) to be lighted.

The lighting source (1) will be as required by the system with respect to power, intensity, etc., like incandescent lamps, low consumption cool bulbs, etc., and will be connected to the power source (6) such as an AC source, batteries, etc.

The luminaire (2) will be of the enclosed type to avoid light losses and, at the same time, should concentrate the light beam on the output body (3), of adequate dimensions to house all optical fibre cable connections (4) in consonance with the required assembly, this body (3) being the only output for the light produced by the luminaire, said body being made of a light, strong and translucent plastic material. Said system having the possibility to have more than one output (3), depending on the system needs and on the luminaire dimensions (2).

The optical fibre cable (4) is used as transmission means between the light beam produced by the light source (1) through the output body (3) and the element to be lighted (5), with the advantage that the light losses in these cables are practically nil, and said cables are provided with a protection or cover. The lighted elements can adopt the configuration ofhanrails, letters, decoration elements, floor signals, etc., since the plastic material they are made of can support high stresses.

The mounting and operation of the lighting system of the present invention is rather easy, requiring only one light source (1), with the emission of a white or color light, depending on the desired effect on the lighted elements (5). Said light source will preferably be enclosed in a corresponding luminaire (2), which conveys the light beam to the output body (3), to which all optical fibre cables (4) have been connected to, as required to light all lighted elements (5). Therefore, it is recomended to reduce as much as posible the distance from the light source (1) to the lighted elements (5) in order to have minimum cable lengths (4).

In the case of long lighted elements (5), more than one light receiving point (more than one cable) can be arranged in order to obtain a proper light distribution. The system makes it possible to introduce between the light source (1) and the output body (3) any means (7) capable of altering the color or shade of the light emitted.

From the above, it can be seen that the lighting system of the present invention is a low cost, almost maintenance free system producing colorful effects.

Once the nature of present invention as well as an embodiment of same have been described sufficiently, it is only to be added that, materials and the assembly can be modified as long as the modifications introduced do not affect to the featured claimed hereinafter:

## Claims

1. Lighting system, characterized in that it consists of a light emitting source (1), placed insid a luminaire (2), totally enclosed except for the output portion (3) where a ligh plastic body is held, said plastic body being made of a light, strong, translucent plastic material, preferably metacrylate, and having a size and shape as to allow for the connection of a number of protected optical fibre cables (4) equal to the lighted elements in the system, said cables being connected to corresponding lighted elements (5) which irradiate the light.

2. Lighting system as claimed in previous claim, characterized in that the output bodies (3) as well as the lighted elements (5) are provided with means for the connection of the light transmission cables (4).
